# EUROPEAN PATENT SPECIFICATION

(11) **EP 1 771 591 B1**
(45) Date of publication and mention of the grant of the patent: **07.12.2016**
(21) Application number: 05753946.2
(22) Date of filing: 22.06.2005
(51) Int. Cl.: C22C 16/00, G21C 21/00

(54) **FUEL BOX IN A BOILING WATER NUCLEAR REACTOR**
BRENNSTOFFKASTEN IN EINEM SIEDEWASSER-KERNREAKTOR
CAPSULE DE COMBUSTIBLE DESTINEE A UN REACTEUR NUCLEAIRE A EAU BOUILLANTE

(30) Priority: 06.07.2004 US 585522 P; 22.10.2004 SE 0402561
(43) Date of publication of application: 11.04.2007
(73) Proprietor: Westinghouse Electric Sweden AB, 721 63 Västerås (SE)
(72) Inventor: HALLSTADIUS, Lars, S-724 81 Västerås (SE); DAHLBÄCK, Mats, S-724 76 Västerås (SE); LIMBÄCK, Magnus, S-723 37 Västeras (SE); BATES, John, Clearfield, UT 84015 (US); DOUGHERTY, James, Layton, UT 84041 (US)
(74) Representative: Berglund, Stefan
(86) International application number: PCT/SE2005/001000
(87) International publication number: WO 2006/004499

(56) References cited:
- EP-A1- 1 225 243
- EP-A1- 1 256 634
- EP-A2- 0 198 570
- EP-A2- 0 353 733
- US-A- 4 649 023
- US-A- 5 223 211
- US-A- 5 230 758
- US-A- 5 805 656
- US-A- 5 838 753

## Description

### Technical field

The present invention relates to fuel boxes in water boiling nuclear reactors and to a method for manufacturing such fuel boxes comprising sheet metals.

### Description of the prior art

In boiling water nuclear reactors the nuclear fuel is arranged in fuel pellets, which are arranged in fuel rods that in turn are arranged in a fuel box. A fuel assembly comprises the fuel box, the therein arranged fuel rods, spreader elements, and various other elements that are known to persons skilled in the art. The fuel boxes are arranged as elongated pipes with openings in the ends. The fuel boxes are manufactured from sheet metals that are bent and welded together, which sheet metals usually are comprised of a zirconium alloy. When zirconium alloys are exposed to neutron irradiation they grow. During operation of a boiling water nuclear reactor the fuel boxes are exposed to hot water and neutron irradiation, which will lead to growth and corrosion of the fuel boxes. The magnitude of this neutron induced growth is different for different alloys. When the material in the fuel box grows it may lead to the bending of the fuel box. The useful life for a fuel box in a boiling water nuclear reactor is dependent on the resistance against corrosion and the resistance against bending.

In the US patent 5,805,656 a fuel box and a method for manufacturing such a fuel box are described. The problem that is intended to be solved is to provide a fuel box with better resistance against neutron induced growth and corrosion compared with prior known fuel boxes. This is solved in said US Patent by binding layers of different alloys in an outer layer and an inner layer in a sheet metal. The inner layer is of an alloy that has a higher resistance against irradiation growth and the outer layer has a higher resistance against corrosion.

Even if a fuel box according to the US Patent provides favorable resistance against neutron induced growth and favorable corrosion resistance properties it is, however, complicated to manufacture sheet metals with a plurality of layers. Thus, there is a need for an alternative to known fuel boxes, which only comprises one layer and which has at least as favorable resistance against neutron induced growth and corrosion as known sheet metals.

US 5838753 describes a process for fabricating nuclear fuel rod cladding tube comprising beta quenching a zirconium alloy billet consisting essentially of from 0.5 to 3.25 weight percent niobium, from 0.3 to 1.8 weight percent tin, the balance of the alloy being essentially nuclear grade zirconium with incidental impurities by heating to a temperature in the beta range above 950°C and rapidly quenching the billet to a temperature below the alpha plus beta to alpha transformation temperature to form a martensitic structure; extruding the beta-quenched billet at a temperature below 600°C to form a hollow; annealing the hollow by heating at a temperature up to 590°C; pilgering the annealed hollow; and final annealing the pilgered annealed hollow to a temperature up to 590°C to form the nuclear fuel rod cladding tube comprising the alloy having a microstructure of beta niobium second phase precipitates distributed uniformly intragranularly and intergranularly forming radiation resistant second phase precipitates in the alloy matrix.

US 5230758 describes an alloy comprising, by weight percent, 0.5-2.0 niobium, 0.7-1.5 tin, 0.07-0.14 iron, and 0.03-0.14 of at least one of nickel and chromium, and at least 0.12 total of iron, nickel and chromium, and up to 220 ppm C, and the balance essentially zirconium. The alloy is also preferably subjected to intermediate recrystallization anneals and to a final stress relief anneal, for example at 466°C during 3 h.

US 4649023 describes that articles, such as tubing, which have excellent corrosion resistance to steam at elevated temperatures and to hydriding, are produced from zirconium alloys containing 0.5 to 2.0 percent niobium, up to 1.5 percent tin, and up to 0.25 percent of a third alloying element such as iron, chromium, molybdenum, vanadium, copper, nickel and tungsten. The articles are formed by beta-treating the alloy, initially deforming the same at a temperature below 650°C and further deforming the same through cold working stages also below 650°C, annealing the material between the cold working stages at a temperature between 500-650°C, and final annealing the same at a temperature below 650°C to provide articles having a microstructure of fine precipitates of less than about 800 angstrom, homogeneously dispersed throughout the zirconium.

### Summary of the invention

An object of the present invention is to provide a fuel box with a homogeneous sheet metal for a boiling water nuclear reactor and a method for manufacturing such a fuel box, wherein the sheet metal, when it is exposed to neutron irradiation grows to a small extent compared with known sheet metals for boiling water nuclear reactors.

A further object of the present invention is to provide a fuel box for a boiling water nuclear reactor and a method for manufacturing such a fuel box, which fuel box has favorable resistance against corrosion and against neutron induced growth and which fuel box is manufactured of a homogeneous material.

These objects are fulfilled with a method and device according to claims 1 and 9.

Further advantages are achieved with the features that are defined in the dependent claims.

A basic idea with the present invention is to provide a sheet metal which consists of a zirconium alloy, which comprises niobium containing secondary phase particles that essentially only consists of β-niobium particles.

With secondary phase particles is in this application meant particles in the alloy which have another composition than the main part of the alloy. β-zirconium particles are particles in the zirconium alloy that contain zirconium and niobium, wherein the major part is zirconium. β-niobium particles are particles in the zirconium alloy that for the most part consist of niobium. The β-niobium particles comprise more than 90 percent by weight niobium and preferably more than 99 percent by weight niobium. When niobium is present in a zirconium alloy, niobium containing secondary phase particles are formed, which are particles in the zirconium alloy that contain niobium or a mixture of niobium and zirconium. If niobium is present in the zirconium alloy in a sufficiently high concentration secondary phase particles in a first phase may be present as a mixture of β-zirconium particles and β-niobium particles, and in a second phase be present as only β-niobium particles. The first phase is stable at a higher temperature than the second phase. The phase boundary for secondary phase particles in the form of β-zirconium particles is the phase boundary between the first phase and the second phase. If the temperature is kept at a certain level below the temperature for the phase boundary for secondary phase particles in the form of β-zirconium particles the β-zirconium particles will be transformed into β-niobium particles.

In the description the term material is used for the object that is going through treatment steps until the material is ready-treated to a sheet metal.

According to a first aspect of the present invention the method comprises the manufacturing of a sheet metal, comprising the step of providing a material of a zirconium alloy, which mainly consists of zirconium, wherein the main alloying materials of the alloy comprises niobium, wherein the alloy comprises niobium containing secondary phase particles and wherein no alloying material is present in a content exceeding 1.6 percent by weight. The method further comprises the steps of subjecting the material to at least one hot-rolling, subjecting the material to at least a first β-quenching, and to subject the hot-rolled material to at least one cold-rolling. The method further comprises the step of, after said at least one cold-rolling and after said first β-quenching, transformation annealing the cold-rolled material, at a temperature under the phase boundary for secondary phase particles in the form of β-zirconium particles, for so long time that essentially all niobium containing secondary phase particles are transformed into β-niobium particles, which are particles in the zirconium alloy with a niobium content exceeding 90 percent by weight.

With such a method a zirconium alloy is provided, which grows only to a small extent when being exposed to neutron irradiation, and which has favorable resistance against corrosion. Naturally, other steps may be included in the method. Furthermore, the different steps in the method may be performed in a different order.

β-quenching is well known to persons skilled in the art and implies that the zirconium alloy is heated to a high temperature, so that a crystal structure of the type bcc (body center cubic) is obtained in the zirconium alloy, and that the zirconium alloy is then rapidly cooled so that a crystal structure of the type hep (hexagonal closed packed) is obtained. Through this method the zirconium alloy gets a randomized structure.

The first β-quenching may be performed before the hot-rolling. If this is the case the structure in the material may be effected to some extent in the following hot-rolling and in further other following steps. Alternatively, the first β-quenching may be performed between two of said at least one hot-rolling and said at least one cold-rolling or between hot-rollings.

To obtain a randomized structure of the alloy, a second β-quenching has to be performed after the last cold-rolling.

In case the method comprises a second β-quenching at a late stage on an almost finished product it is advantageous that the method comprises a cold deformation between the second β-quenching and the transformation annealing, wherein the material is stretched so that the remaining deformation is 1%-7% of the original size before the stretching. With a cold deformation before the transformation annealing the desired result for the composition of the secondary phase particles is achieved more rapidly.

The temperature during the transformation annealing affects the rate at which β-zirconium particles are transformed into β-niobium particles. The rate is dependent partly on the rate of diffusion at which niobium diffuses in zirconium and partly on the rate of nucleation at which niobium particles are formed in zirconium. The rate of diffusion increases with temperature while the rate of nucleation decreases with temperature. The transformation annealing is performed at 450°C-600°C, advantageously at 500°C-600°C, and preferably at 520°C-580°C in order for the transformation to be rapid.

The time period during which the transformation annealing has to proceed depends on the temperature. If the temperature is kept at 500°C-600°C, the transformation annealing is preferably performed during 6-10 hours and at least during more than or equal to 3 hours. At lower temperatures the transformation annealing has to proceed for longer time.

A group of alloys can be used for achieving good properties regarding corrosion and neutron induced growth, in which the niobium content is 0.5-1.6 percent by weight, the iron content is 0.3-0.6 percent by weight and the tin content is 0.5-0.85 percent by weight. There might also be other materials present in the alloy, the content of which, however, is below 0.05 percent by weight.

Another group of alloys with especially favorable properties is named Zirlo™ in which group of alloys the tin content is 0.7-1.1 percent by weight, the iron content is 0.09-0.15 percent by weight and the niobium content is 0.8-1.2 percent by weight. There might also be other materials in the alloy, the content of which, however, is below 0.05 percent by weight.

Advantageously, the temperature after the transformation annealing does not exceed the temperature for the phase boundary for secondary phase particles in the form of β-zirconium particles. In case the temperature after the transformation annealing exceeds the temperature for the phase boundary for secondary phase particles in the form of β-zirconium particles, it does that for at most so long time that essentially all niobium containing secondary phase particles are maintained as β-niobium particles. In order to achieve this the temperature, after the transformation annealing, exceeds the temperature for the phase boundary for secondary phase particles in the form of β-zirconium particles, suitably for no more than 10 minutes, preferably for no more than 5 minutes and advantageously not at all. The time depends on how much the temperature is allowed to exceed the temperature for the phase boundary for β-zirconium particles.

According to a first aspect of the present invention a method is provided for manufacturing a fuel box for a boiling water nuclear reactor, wherein a sheet metal is manufactured according to the above, and wherein the sheet metal is arranged as at least one of the walls of the fuel box.

According to a second aspect of the present invention a fuel box as defined in claim 9 is provided.

The features that have been described in relation to the method above may, where it is applicable, also be applied to a sheet metal and a fuel box according to the invention.

It goes without saying that the different features that have been described above, may be combined in the same embodiment where it is applicable. In the following different embodiments of the invention will be described with reference to the accompanying drawings.

### Short description of the drawing

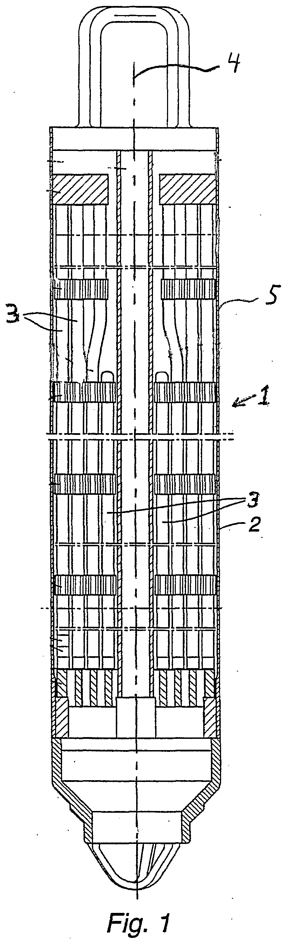

Fig 1 shows a fuel assembly including a fuel box according to the present invention.

### Description of preferred embodiments

Fig 1 shows a fuel assembly 1 according to the prior art, which is arranged for a boiling water nuclear reactor. The fuel assembly 1 comprises a fuel box 2 according to the present invention. The fuel assembly also comprises fuel rods 3 in which the nuclear fuel is arranged in fuel pellets. The fuel box 2 has a length axis 4 which is parallel to the length axis of the fuel rods 3. The fuel box 2 is usually manufactured from two sheet metals 5 which are bent and welded together along the direction of the length axis 4 of the fuel box 2.

Below two examples are given of manufacturing methods of a sheet metal 5 for the fuel box 2.

Common for the methods is that a transformation annealing is performed at a late stage in order to transform the secondary phase particles in the form of β-zirconium particles into secondary phase particles in the form of β-niobium particles. The annealing is performed at a temperature that is below the temperature for the phase boundary for β-zirconium particles, which is at approximately 610°C. The driving force for the transformation of secondary phase particles from β-zirconium particles to β-niobium particles is partly limited by the diffusion rate for niobium in zirconium and partly limited by the nucleation rate, which is the rate at which secondary phase particles are formed in the alloy. The diffusion increases with an increasing temperature while the nucleation rate decreases with an increasing temperature. This implies that there is an optimal temperature for a high transformation rate.

For the alloys that are contemplated in this application the optimal temperature for a rapid transformation is approximately 550°C. However, it is possible to achieve the desired result as long as the temperature is below the temperature for the phase boundary for β-zirconium particles. A preferred interval is 500-600°C and an even more preferred interval is 540-580°C.

The alloys that primarily are interesting for the invention are the ones that have a niobium content of 0.5-1.6 percent by weight.

A first group of alloys are the ones that have the niobium content mentioned above, an iron content of 0.3-0.6 percent by weight and a tin content of 0.5-0.85 percent by weight. There may also be other materials in the alloy. The content of these other materials is, however, below 0.05 percent by weight.

A second group of alloys is Zirlo™ that has 0.7-1.1 percent by weight tin, 0.09-0.15 percent by weight iron, 0.8-1.2 percent by weight niobium. There might also be other materials in the alloy, the content of which, however, is below 0.05 percent by weight.

These groups of alloys provide favorable resistance against corrosion and little neutron induced growth.

### Example 1

When manufacturing the sheet metal 5 in the fuel box 2 according to a first example, firstly an electrode of a zirconium alloy is manufactured, which comprises approximately 1 percent by weight of niobium, 0.4 percent by weight of iron and 0.6 percent by weight of tin based on the weight of the electrode, by pressing together zirconium briquettes together with alloying materials. Thereafter, the electrode is vacuum melted to a casting which thereafter is vacuum melted at least once, whereupon the casting is forged to a material which is 100-125 mm thick, which in turn is worked and surface conditioned. Thereafter the material is subject to β-quenching, which implies that the material is heated to a temperature of 1000°C-1100°C and thereafter is cooled. The material is cooled at a rate of at least 10°C per second to a temperature below 500°C. After the β-quenching the material is surface conditioned and is then hot-rolled in several steps. The number of steps and the thicknesses after each hot-rolling depends on the final thickness that is desired on the sheet metal 5.

The material is subject to a number of cold-rollings. By subjecting the hot-rolled material to annealing before the first cold-rolling a favorable grain structure is obtained in the material. Between each one of the cold-rollings the material is annealed in order to restore the grain structure before the next cold-rolling, according to standard manufacturing procedures. Annealing is performed at a temperature below the temperature at β-quenching, i.e., below 900°C and preferably below approximately 600°C, for example at approximately 560°C.

After the cold-rollings a transformation annealing is performed by heating the material to a temperature of 545°C for six hours. During the transformation annealing secondary phase particles in the form of β-zirconium particles are transformed into secondary phase particles in the form of β-niobium particles, which consist of particles with a niobium content that exceeds 99 percent by weight.

After the transformation annealing the material is cold-rolled to a finished dimension and is finish annealed in order to restore the grain structure. The finish annealing is performed at a temperature that is below the temperature for the phase boundary for β-zirconium particles. The finished sheet metal has thereby been manufactured. Finally, the edges of the sheet metal 5 are cut, which sheet metal is also surface conditioned.

### Example 2

When manufacturing the sheet metal 5 in the fuel box 2 according to a second example, an electrode of a zirconium alloy known under the name Zirlo is manufactured by pressing together zirconium briquettes together with the alloying materials. Thereafter, the electrode is vacuum melted to a casting which thereafter is vacuum re-melted at least once, whereupon the casting is forged to a material which is 100-125 mm thick, which in turn is worked and surface conditioned. Thereafter the material is subject to β-quenching, which implies that the material is heated to a temperature of 1000°C-1100°C and thereafter is cooled rapidly. The material is cooled at a rate of at least 10°C per second to a temperature below 500°C. Then the material is hot-rolled in several steps. The number of steps and the thicknesses after each hot-rolling depends on the final thickness that is desired on the sheet metal 5.

By subjecting the hot-rolled material to annealing before the first cold-rolling a favorable grain structure is obtained in the material. The material is subject to a number of cold rollings. Between each one of the cold-rollings the material is annealed in order to restore the grain structure before the next cold-rolling, according to standard manufacturing procedures. Annealing is performed at a temperature below the temperature at β-quenching, i.e. below 900°C and preferably below approximately 600°C, for example at approximately 560°C.

Thereafter the material is subject to a second β-quenching, which implies that the material is heated to a temperature of 1000°C-1100°C and is then cooled rapidly. The material is cooled at a rate of at least 10°C per second to a temperature below 500°C.

After the second β-quenching a cold deformation is performed, wherein the material is stretched so that the remaining deformation is 3% of the original size before stretching. Thereafter a transformation annealing is performed by heating the material to a temperature of 545°C during six hours. During the transformation annealing secondary phase particles of β-zirconium particles are transformed to secondary phase particles in the form of β-niobium particles, which consist of particles with a niobium content that exceeds 99 percent by weight. The finished sheet metal 5 has thus been manufactured. Finally, the edges of the sheet metal 5 are cut, which sheet metal is also surface conditioned.

After manufacturing the sheet metal according to any one of the above examples a fuel box 2 is manufactured by bending two sheet metals 5 and welding them together to a fuel box 2. The way a fuel box 2 is manufactured from sheet metals 5 is known from the art and will not be described in detail here.

Naturally, the invention is not limited to the embodiments described above but may be modified in numerous ways without departing from the scope of the present invention, which is limited only by the appended claims.

## Claims

1. A method for manufacturing a fuel box (2) for a boiling water nuclear reactor, wherein a sheet metal (5) is manufactured by a method comprising the steps of
providing a material of a zirconium alloy, which mainly consists of zirconium, wherein the main alloying materials of the alloy comprises niobium, wherein no alloying material is present in a content exceeding 1.6 percent by weight and wherein the alloy comprises niobium containing secondary phase particles, wherein the main alloying materials are niobium, iron and tin, wherein the content of any additional materials is below 0.05 percent by weight, wherein either
the niobium content is 0.5-1.6 percent by weight, the iron content is 0.3-0.6 percent by weight, and the tin content is 0.5-0.85 percent by weight, or
the tin content is 0.7-1.1 percent by weight, the iron content is 0.09-0.15 percent by weight, and the niobium content is 0.8-1.2 percent by weight,
subjecting the material to at least one hot-rolling,
subjecting the material to at least a first β-quenching,
subjecting the hot-rolled material to at least one cold-rolling, **characterized in that**,
after said at least one cold-rolling and after said first β-quenching, transformation annealing the cold-rolled material, at a temperature below the phase boundary for secondary phase particles in the form of β-zirconium particles, for so long time that essentially all niobium containing secondary phase particles are transformed into β-niobium particles, which are particles in the zirconium alloy with a niobium content exceeding 90 percent by weight, and
the sheet metal (5) is arranged as at least one of the walls of the fuel box (2).

2. A method according to claim 1, wherein the first β-quenching is performed before the hot-rolling.

3. A method according to claim 1, wherein the first β-quenching is performed between one of said at least one hot-rolling and said at least one cold-rolling.

4. A method according to claim 1, also comprising a second β-quenching, which is performed after said at least one cold rolling and before the transformation annealing.

5. A method according to claim 4, also comprising a cold deformation between the second β-quenching and the transformation annealing, wherein the material during the cold deformation is stretched so that the remaining deformation is 1 %-7% of the original size before the stretching.

6. A method according to any one of the preceding claims, wherein the transformation annealing is performed at 450°C-600°C, advantageously at 500°C-600°C and preferably at 540°C-580°C.

7. A method according to any one of the preceding claims, wherein the temperature, in case it after the transformation annealing exceeds the temperature for the phase boundary for secondary phase particles in the form of β-zirconium particles, does it for at most so long time that essentially all niobium containing secondary phase particles are maintained as β-niobium particles.

8. A method according to claim 7, wherein the temperature after the transformation annealing exceeds the temperature for the phase boundary for secondary phase particles in the form of β-zirconium particles for no longer than 10 minutes, preferably no more than 5 minutes and advantageously not at all.

9. Fuel box (2) for a boiling water nuclear reactor, which comprises a sheet metal (5) arranged as at least one of the walls of the fuel box (2), wherein said sheet metal (5) consists of a zirconium alloy that mainly consists of zirconium, wherein the main alloying materials of the alloy comprises niobium, wherein no alloying material is present in a content exceeding 1.6 percent by weight, and wherein the alloy comprises niobium containing secondary phase particles wherein the main alloying materials are niobium, iron and tin, and wherein the content of any additional materials is below 0.05 percent by weight, wherein either
the niobium content is 0.5-1.6 percent by weight, the iron content is 0.3-0.6 percent by weight, and the tin content is 0.5-0.85 percent by weight, or
the tin content is 0.7-1.1 percent by weight, the iron content is 0.09-0.15 percent by weight, and the niobium content is 0.8-1.2 percent by weight,
**characterized in that** the niobium containing secondary phase particles essentially only consist of β-niobium particles, which are particles in the zirconium alloy with a niobium content exceeding 90 percent by weight.

## Patentansprüche

1. Verfahren zur Herstellung eines Brennstoffkastens (2) für einen Siedewasser-Kernreaktor, wobei ein Blech (5) hergestellt wird, und zwar durch ein Verfahren, das folgende Schritte umfasst:
Bereitstellen eines Materials aus einer Zirconiumlegierung, die hauptsächlich aus Zirconium besteht, wobei die Hauptlegierungsmaterialien der Legierung Niob umfassen, wobei kein Legierungsmaterial mit einem Gehalt von über 1,6 Gewichtsprozent vorhanden ist und wobei die Legierung Niob enthaltende Sekundärphasenpartikel umfasst, wobei die Hauptlegierungsmaterialien Niob, Eisen und Zinn sind, wobei der Gehalt an zusätzlichen Materialien unter 0,05 Gewichtsprozent liegt, wobei entweder
der Niobgehalt 0,5-1,6 Gewichtsprozent beträgt, der Eisengehalt 0,3-0,6 Gewichtsprozent beträgt und der Zinngehalt 0,5-0,85 Gewichtsprozent beträgt oder der Zinngehalt 0,7-1,1 Gewichtsprozent beträgt, der Eisengehalt 0,09-0,15 Gewichtsprozent beträgt und der Niobgehalt 0,8-1,2 Gewichtsprozent beträgt, wenigstens ein Warmwalzen des Materials,
wenigstens ein erstes β-Abschrecken des Materials,
wenigstens ein Kaltwalzen des warm gewalzten Materials, **dadurch gekennzeichnet, dass**
nach dem wenigstens einen Kaltwalzen und nach dem ersten β-Abschrecken, Umwandlungsglühen des kalt gewalzten Materials bei einer Temperatur unterhalb der Phasengrenze für Sekundärphasenpartikel in Form von β-Zirconiumpartikeln, so lange, dass im Wesentlichen alle Niob enthaltenden Sekundärphasenpartikel in β-Niobpartikel umgewandelt werden, bei denen es sich um Partikel in der Zirconiumlegierung mit einem Niobgehalt von über 90 Gewichtsprozent handelt, und
das Blech (5) als wenigstens eine der Wände des Brennstoffkastens (2) angeordnet wird.

2. Verfahren nach Anspruch 1, wobei das erste β-Abschrecken vor dem Warmwalzen durchgeführt wird.

3. Verfahren nach Anspruch 1, wobei das erste β-Abschrecken zwischen einem des wenigstens einen Warmwalzens und dem wenigstens einen Kaltwalzen durchgeführt wird.

4. Verfahren nach Anspruch 1, das auch ein zweites β-Abschrecken umfasst, das nach dem wenigstens einen Kaltwalzen und vor dem Umwandlungsglühen durchgeführt wird.

5. Verfahren nach Anspruch 4, das zwischen dem zweiten β-Abschrecken und dem Umwandlungsglühen auch eine Kaltumformung umfasst, wobei das Material während der Kaltumformung so gestreckt wird, dass die bleibende Umformung 1 % - 7 % der Originalgröße vor dem Strecken beträgt.

6. Verfahren nach einem der vorangehenden Ansprüche, wobei das Umwandlungsglühen bei 450 °C-600 °C, vorteilhafterweise bei 500 °C-600 °C und bevorzugt bei 540 °C-580 °C durchgeführt wird.

7. Verfahren nach einem der vorangehenden Ansprüche, wobei die Temperatur, im Fall, dass sie nach dem Umwandlungsglühen über der Temperatur für die Phasengrenze für Sekundärphasenpartikel in Form von β-Zirconiumpartikeln liegt, dies höchstens so lange tut, dass im Wesentlichen alle Niob enthaltenden Sekundärphasenpartikel als β-Niobpartikel erhalten bleiben.

8. Verfahren nach Anspruch 7, wobei die Temperatur nach dem Umwandlungsglühen nicht länger als 10 Minuten, bevorzugt nicht länger als 5 Minuten und vorteilhafterweise überhaupt nicht über der Temperatur für die Phasengrenze für Sekundärphasenpartikel in Form von β-Zirconiumpartikeln liegt.

9. Brennstoffkasten (2) für einen Siedewasser-Kernreaktor, der ein Blech (5) umfasst, das als wenigstens eine der Wände des Brennstoffkastens (2) angeordnet ist, wobei das Blech (5) aus einer Zirconiumlegierung besteht, die hauptsächlich aus Zirconium besteht, wobei die Hauptlegierungsmaterialien der Legierung Niob umfassen, wobei kein Legierungsmaterial mit einem Gehalt von über 1,6 Gewichtsprozent vorhanden ist und wobei die Legierung Niob enthaltende Sekundärphasenpartikel umfasst, wobei die Hauptlegierungsmaterialien Niob, Eisen und Zinn sind und wobei der Gehalt an zusätzlichen Materialien unter 0,05 Gewichtsprozent liegt, wobei entweder
der Niobgehalt 0,5-1,6 Gewichtsprozent beträgt, der Eisengehalt 0,3-0,6 Gewichtsprozent beträgt und der Zinngehalt 0,5-0,85 Gewichtsprozent beträgt oder
der Zinngehalt 0,7-1,1 Gewichtsprozent beträgt, der Eisengehalt 0,09-0,15 Gewichtsprozent beträgt und der Niobgehalt 0,8-1,2 Gewichtsprozent beträgt,
**dadurch gekennzeichnet, dass** die Niob enthaltenden Sekundärphasenpartikel im Wesentlichen nur aus β-Niobpartikeln bestehen, bei denen es sich um Partikel in der Zirconiumlegierung mit einem Niobgehalt von über 90 Gewichtsprozent handelt.

## Revendications

1. Procédé de fabrication d'une capsule de combustible (2) pour un réacteur nucléaire à eau bouillante, dans lequel une tôle (5) est fabriquée par un procédé comprenant les étapes consistant à :
fournir d'un matériau d'un alliage de zirconium, qui se compose principalement de zirconium, dans lequel les principaux matériaux d'alliage de l'alliage comprennent du niobium, dans lequel aucun matériau d'alliage n'est présent en une teneur supérieure à 1,6 % en poids, et dans lequel l'alliage comprend des particules de phase secondaire contenant du niobium, dans lequel les principaux matériaux d'alliage sont le niobium, le fer et l'étain, dans lequel la teneur de quelconques matériaux supplémentaires est inférieure à 0,05 % en poids, dans lequel
la teneur en niobium est de 0,5 à 1,6 % en poids, la teneur en fer est de 0,3 à 0,6 % en poids, et la teneur en étain est de 0,5 à 0,85 % en poids, ou
la teneur en étain est de 0,7 à 1,1 % en poids, la teneur en fer est 0,09 à 0,15 % en poids, et la teneur en niobium est de 0,8 à 1,2 % en poids,
soumettre le matériau à au moins un laminage à chaud,
soumettre le matériau à au moins une première β-trempe,
soumettre le matériau laminé à chaud à au moins un laminage à froid, **caractérisé par**,
après ledit au moins un laminage à froid et après ladite première β-trempe, un recuit de transformation du matériau laminé à froid, à une température inférieure à la limite de phase pour des particules de phase secondaire sous forme de particules de β-zirconium, aussi longtemps que nécessaire pour que sensiblement toutes les particules de phase secondaire contenant du niobium soient transformées en particules de β-niobium, qui sont des particules dans l'alliage de zirconium avec une teneur en niobium dépassant 90 % en poids, et
la tôle (5) est agencée en tant qu'au moins une des parois de la capsule à combustible (2).

2. Procédé selon la revendication 1, dans lequel la première β-trempe est réalisée avant le laminage à chaud.

3. Procédé selon la revendication 1, dans lequel la première β-trempe est effectuée entre l'un dudit au moins un laminage à chaud et dudit au moins un laminage à froid.

4. Procédé selon la revendication 1, comprenant en outre une seconde β-trempe, qui est réalisée après ledit au moins un laminage à froid et avant le recuit de transformation.

5. Procédé selon la revendication 4, comprenant en outre une déformation à froid entre la seconde β-trempe et le recuit de transformation, dans lequel le matériau, lors de la déformation à froid, est étiré de telle sorte que la déformation résiduelle est de 1 % à 7 % de la taille d'origine avant l'étirage.

6. Procédé selon l'une quelconque des revendications précédentes, dans lequel le recuit de transformation est effectué à 450°C-600°C, avantageusement à 500°C-600°C, et de préférence à 540°C-580°C.

7. Procédé selon l'une quelconque des revendications précédentes, dans lequel la température, dans un cas où celle-ci dépasse après le recuit de transformation la température de la limite de phase pour des particules de phase secondaire sous la forme de particules de β-zirconium, le fait pour au plus aussi longtemps que nécessaire pour que sensiblement toutes les particules de phase secondaire contenant du niobium soient maintenues sous la forme de particules de β-niobium.

8. Procédé selon la revendication 7, dans lequel la température, après le recuit de transformation, dépasse la température de la limite de phase pour des particules de phase secondaire sous la forme de particules de β-zirconium pendant pas plus longtemps que 10 minutes, de préférence pas plus de 5 minutes, et avantageusement pas du tout.

9. Capsule à combustible (2) pour un réacteur nucléaire à eau bouillante, qui comprend une tôle (5) agencée en tant qu'au moins une des parois de la capsule à combustible (2), dans lequel ladite tôle (5) est constituée d'un alliage de zirconium qui consiste principalement en du zirconium, dans lequel les principaux éléments d'alliage de l'alliage comprennent du niobium, dans lequel aucun matériau d'alliage n'est présent en une teneur supérieure à 1,6 % en poids, et dans lequel l'alliage comprend des particules de phase secondaire contenant du niobium, dans lequel les principaux matériaux d'alliage sont le niobium, le fer et l'étain, et dans lequel la teneur de quelconques matériaux supplémentaires est inférieure à 0,05 % en poids, dans lequel
la teneur en niobium est de 0,5 à 1,6 % en poids, la teneur en fer est de 0,3 à 0,6 % en poids, et la teneur en étain est de 0,5 à 0,85 % en poids, ou
la teneur en étain est de 0,7 à 1,1 % en poids, la teneur en fer est 0,09 à 0,15 % en poids, et la teneur en niobium est de 0,8 à 1,2 % en poids,
**caractérisé en ce que** les particules de phase secondaire contenant du niobium consistent sensiblement uniquement en des particules de β-niobium, qui sont des particules dans l'alliage de zirconium avec une teneur en niobium supérieure à 90 % en poids.
